# EUROPÄISCHE PATENTSCHRIFT

(11) **EP 1 617 194 B1**
(45) Veröffentlichungstag und Bekanntmachung des Hinweises auf die Patenterteilung: **04.04.2012**
(21) Anmeldenummer: 05013311.5
(22) Anmeldetag: 21.06.2005
(51) Int. Cl.: G01J 5/02

(54) **Transportable Messsonde, Messsystem, Verfahren zur Erfassung von Messwerten sowie Verwendung des Messsystems**
Transportable measurement probe, measurement system, method for carrying out measurements and use of the measurement system
Sonde de mesure transportable, système de mesure, procédé de mesure et utilisation du système de mesure

(30) Priorität: 13.07.2004 DE 102004034031
(43) Veröffentlichungstag der Anmeldung: 18.01.2006
(73) Patentinhaber: Heraeus Electro-Nite International N.V., 3530 Houthalen (BE)
(72) Erfinder: Dams, Francis, 3010 Leuven (BE)
(74) Vertreter: Kühn, Hans-Christian

(56) Entgegenhaltungen:
- GB-A- 2 369 962
- JP-A- 7 143 551
- JP-A- 10 090 017
- JP-A- 11 206 721
- JP-A- 2000 028 438

## Beschreibung

Die Erfindung betrifft eine transportable Messsonde, ein Messsystem, ein Verfahren zur Erfassung von Messwerten sowie eine Verwendung des Messsystems.

Transportable Messsonden sind aus der Technik für unterschiedlichste Anwendungszwecke bekannt. Beispielsweise in US 6,451,186 B1 ist eine Messsonde zur Temperaturmessung in Kryolithschmelzen offenbart. Derartige Messsonden weisen einen Sensor auf sowie Signalleitungen, die mittels eines Kabels mit einer Auswerteelektronik verbunden sind. Damit sind diese Sonden in beschränktem Umfang transportabel und an unterschiedlichen Messstellen einsetzbar.

Aus Light Metals 1998, Seiten 331 ff. ist es bekannt, an Schmelzwannen in Aluminiumwerken Sender stationär anzuordnen zur Übermittlung von Funksignalen an mit sogenannten Pagern ausgerüstete Bedienpersonen. Dabei werden bei Grenzwertüberschreitungen Alarminformationen übermittelt. Wesentliche Daten werden von den einzelnen Wannen an eine Steuerzentrale geliefert. Einrichtungen zur drahtlosen Übermittlung von in Stahlschmelzen gewonnenen Messsignalen sind aus JP 2000-028438 A und aus US 5,319,576 A bekannt.

Von der Lulea University Technology ist ein Indoor-Positionssystem bekannt (ISSN 1404-5494), mit dessen Hilfe eine recht genaue Ortsbestimmung innerhalb von Gebäuden möglich ist. Dieses System ist eine Ergänzung zum GPS, da dieses in geschlossenen Gebäuden nicht ohne weiteres funktioniert. Die Anpassung eines GPS-Systems zur Nutzung in Innerräumen ist in US 5,815,114 A beschrieben.

Weitere Messsysteme werden in GB 2 369 962, JP 11 206 721, JP 07 143 551 und JP 10 090 017 beschrieben.

Aufgabe der vorliegenden Erfindung ist es, die bekannten Verfahren zur Erfassung von Messdaten einer transportablen Messsonde zu verbessern, um unabhängig von Kabellängen auf einfache Weise Messergebnisse zu übermitteln.

Die Aufgabe wird erfindungsgemäß durch die Merkmale des Anspruchs 1 gelöst.

Das erfindungsgemäße Verfahren zur Erfassung von Messdaten einer transportablen Messsonde durch eine Auswerteeinrichtung ist dadurch gekennzeichnet, dass die Messsonde : mittels eines Innenraumpositionssystems ihre räumliche Position sowie mittels eines Sensors auch Messdaten in mehreren Messstellen erfasst und die Messdaten sowie die zum Zeitpunkt der Erfassung der Messdaten bestehende Position über einen Sender an eine Auswerteeinrichtung drahtlos übermittelt. Die Erfassung der Messdaten und der Position muss nicht zwangsläufig gleichzeitig erfolgen, auch eine Positionserfassung kurz vor oder kurz nach der Messwerterfassung ist möglich, da in der Regel lediglich wichtig ist, dass die Messwerte einem bestimmten Ort zugeordnet werden können, beispielsweise einer Schmelzwanne eines Aluminiumwerkes. Dabei ist es zweckmäßig, dass die räumliche Position mittels eines Sende- und Empfangsmoduls erfasst wird, an welches die der räumlichen Position der Messsonde entsprechende Daten ebenfalls drahtlos übermittelt werden. Erfindungsgemäß ist es vorteilhaft, dass die Messsonde nacheinander an verschiedenen Orten ihre räumliche Position sowie Messdaten erfasst und die Mess- und Positionsdaten jeweils an die Auswerteeinrichtung übermittelt werden. Insbesondere ist das Verfahren vorteilhafterweise zur Erfassung von Messdaten, insbesondere der Temperatur oder von chemischen Bestandteilen, in einer Metall- oder Kryolithschmelze durchführbar.

Dadurch, dass die Messsonde ein Sende- und Empfangsmodul aufweist zur drahtlosen Übermittlung von Informationen innerhalb von Gebäuden oder umschlossenen Räumen, wobei das Sende- und Empfangsmodul zur Erfassung und zur Übermittlung der Positionsdaten der Messsonde mittels eines Innenraumpositionssystems, an eine Auswerteeinrichtung geeignet ist, kann die Messsonde selbst sehr leicht gehalten werden, Kabel, die die Beweglichkeit der Bedienperson mit der Messsonde behindern, sind nicht notwendig und es genügt im Prinzip der Betrieb einer Messsonde zur Messung in beliebig vielen Messstellen, so dass nur ein einziges Messsystem notwendig ist. Die Auswerteeinrichtung kann zentral stationiert werden, so dass die Messdaten in einer Steuerungszentrale empfangen und verarbeitet werden und dort zur Steuerung der gemessenen Umgebung, beispielsweise von Schmelzwannen in Aluminiumwerken verwendet werden. Durch die Kombination von Positionsmessung und -übermittlung mit einer Eigenschaftsmessung und -übermittlung können die Eigenschaftsmesswerte stets einer bestimmten Position, z. B. einer bestimmten Schmelzwanne bzw. dem gemessenen Medium konkret und exakt zugeordnet werden. Dabei kann es zweckmäßig sein, das Sende- und Empfangsmodul aus separaten Einheiten jeweils für das Senden und das Empfangen von Daten auszubilden, wobei die Positionsdaten drahtlos empfangen und weitergesendet werden und die Eigenschaftsdaten ebenfalls drahtlos weitergeleitet werden, wobei die unterschiedlichen Daten durch unterschiedliche Sendeeinheiten weitergeleitet werden können. Auch eine bauliche Zusammenfassung der Sende- und Empfangseinheiten ist möglich.

Zweckmäßig ist es, dass die Messsonde einen Sensor zur Erfassung von Temperatur- und/oder von chemischen Bestandteilen, vorzugsweise einer Metallschmelze oder einer Kryolithschmelze aufweist und dass das Sende- und Empfangsmodul zur Übermittlung der die Temperatur und/oder chemischen Bestandteile charaktisierenden Messgrößen an die Auswerteeinrichtung geeignet ist. Damit lassen sich Schmelzprozesse in Stahlwerken oder insbesondere in Aluminiumwerken vorteilhaft erfassen und auswerten. Das erfindungsgemäße Messsystem weist neben der erfindungsgemäßen Messsonde eine Auswerteeinrichtung auf, wobei die Auswerteeinrichtung einen Empfänger aufweist zur drahtlosen Aufnahme von Informationen. Die Informationsweiterleitung kann über Infrarot- oder Ultraschallwellen erfolgen. Auch eine Übermittlung über Funkwellen, als sogenannten WLAN, über Bluetooth-Technik ist möglich, wobei verschiedene Techniken auch miteinander kombiniert werden können.

Die erfindungsgemäße Messsonde kann also insbesondere verwendet werden zur Messung von Temperatur und/oder von chemischen Bestandteilen von Metall- oder Kryolithschmelzen, insbesondere zur nacheinander erfolgenden Messung in unterschiedlichen Schmelzenbehältern.

Nachfolgend wird ein Ausführungsbeispiel der Erfindung beschrieben.

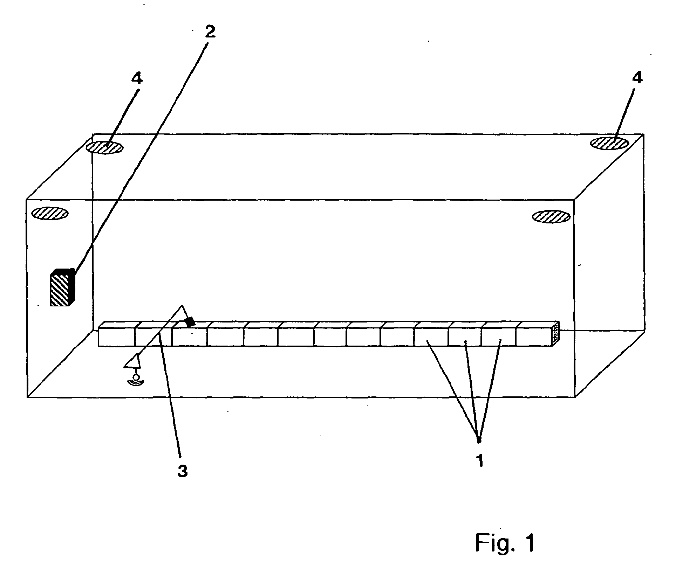

Die Figur 1 zeigt die schematische Darstellung einer Halle eines Aluminiumwerkes mit einer Vielzahl von nebeneinander angeordneten Elektrolysewannen 1. Während des Prozesses wird beispielsweise die Badtemperatur oder die Konzentration von Bestandteilen der Aluminiumschmelze gemessen und die Messsignale werden zu einer Steuerungszentrale 2 mit einer Auswerteeinrichtung für die übermittelten Daten weitergeleitet. Da die Reihe der Elektrolysewannen länger als 100 m sein kann, ist es nicht ohne weiteres möglich, eine kabelgebundene Meßsonde 3 zu verwenden, so dass bisher entweder jeder Wanne 1 eine Messsonde stationär zugeordnet wurde oder eine Messsonde kabelgebunden für Messungen in mehreren Wannen verwendet wurde. Dabei ist jedoch eine aufwendige Zuordnung der einzelnen Messsignale zu einer bestimmten Wanne nötig. Eine drahtlose Datenübermittlung, verbunden mit der gleichzeitigen Übermittlung der Position der Messsonde 3 erlaubt eine eindeutige Zuordnung. Dazu enthält die Messsonde 3 einen Sender/Empfänger zur Ermittlung und Weiterleitung der mit Hilfe eines Innenraumpositionssystems 4 (auch "indoor positioning system" - IPS) gewonnenen Standortdaten, die an die Steuerungszentrale 2 weitergeleitet und dort mit den gespeicherten Positionsdaten der Wannen 1 abgeglichen werden. Die Messsonde 3 enthält weiterhin einen Sender zur Übermittlung der aus der Schmelze gewonnenen Messsignale an die Steuerungszentrale, in der die Daten ausgewertet werden. Dadurch kann jede Wanne 1 auf einfache Weise individuell angesteuert werden.

## Patentansprüche

1. Verfahren zur Erfassung von Messdaten einer transportablen Messsonde (3) durch eine Auswerteeinrichtung (2), **dadurch gekennzeichnet, dass** die Messsonde (3) mittels eines Innenraumpositionssystems (4) ihre räumliche Position und mittels eines Sensors Messdaten in mehreren Messstellen erfasst und die Messdaten sowie die zum Zeitpunkt der Erfassung der Messdaten bestehende Position über einen Sender an eine Auswerteeinrichtung (2) drahtlos übermittelt, wobei eine Zuordnung der Messdaten zu einem bestimmten Schmelzenbehälter erfolgt.

2. Verfahren nach Anspruch 1, **dadurch gekennzeichnet, dass** die räumliche Position mittels eines Sende- und Empfangsmoduls erfasst wird, an welches die der räumlichen Position der Messsonde (3) entsprechenden Daten drahtlos übermittelt werden.

3. Verfahren nach Anspruch 1, **dadurch gekennzeichnet, dass** die Messsonde (3) nacheinander an verschiedenen Orten ihre räumliche Position und Messdaten erfasst und die Mess- und Positionsdaten jeweils an die Auswerteeinrichtung übermittelt werden.

4. Verfahren nach Anspruch 1, **dadurch gekennzeichnet, dass** die Messdaten, insbesondere Temperatur und/oder chemische Bestandteile, in einer Metall- oder Kryolithschmelze erfasst werden.

## Claims

1. A method for collecting measurement data of a portable measuring probe (3) by means of an evaluation apparatus (2), **characterized in that** the measuring probe (3) registers its position in space by means of an indoor position system (4) and collects measurement data at a plurality of measuring points by means of a sensor and wirelessly transfers the measurement data as well as the position existing at the time of measurement data collection to an evaluation apparatus (2) via a transmitter, wherein the measurement data is allocated to a specific melt container.

2. The method according to Claim 1, **characterized in that** the position in space is registered by means of a transmitter and receiver module, the data corresponding to the position in space of the measuring probe (3) being wirelessly transferred to said transmitter and receiver module.

3. The method according to Claim 1, **characterized in that** the measuring probe (3) registers its position in space one after the other at different locations and collects measurement data and the measurement and position data is each transferred to the evaluation apparatus.

4. The method according to Claim 1, **characterized in that** the measurement data, more particularly the temperature and/or chemical components, in molten metal or cryolite is collected.

## Revendications

1. Procédé de détection de données de mesure d'une sonde de mesure transportable (3) par un dispositif d'évaluation (2), **caractérisé en ce que** la sonde de mesure (3) détecte sa position spatiale au moyen d'un système de position spatiale interne (4) et des données de mesure en plusieurs points de mesure au moyen d'un capteur et transmet sans fil les données de mesure ainsi que la position existant au moment de la détection des données de mesure par le biais d'un émetteur à un dispositif d'évaluation (2), dans lequel une association des données de mesure à un récipient de masse fondue déterminé est effectuée.

2. Procédé selon la revendication 1, **caractérisé en ce que** la position spatiale est détectée au moyen d'un module d'émission et de réception auquel les données correspondant à la position spatiale de la sonde de mesure (3) sont transmises sans fil.

3. Procédé selon la revendication 1, **caractérisé en ce que** la sonde de mesure (3) détecte sa position spatiale et des données de mesure successivement en différents lieux et les données de mesure et de position sont transmises à chaque fois au dispositif d'évaluation.

4. Procédé selon la revendication 1, **caractérisé en ce que** les données de mesure, notamment la température et/ou les constituants chimiques, sont détectées dans une masse fondue métallique ou de cryolithe.
